Europäisches Patentamt

European Patent Office

Office européen des brevets

(19)

(11) EP 0 641 845 B1

(12) FASCICULE DE BREVET EUROPEEN

(45) Date de publication et mention
de la délivrance du brevet:
**25.04.2001 Bulletin 2001/17**

(51) Int Cl.$^7$: **C09D 5/24**, H01B 1/20,
H01B 1/08

(21) Numéro de dépôt: **94430007.8**

(22) Date de dépôt: **26.08.1994**

(54) **Utilisation d'une matière fluide ou pâteuse électriquement conductrice pour la réalisation d'un revêtement de surface chauffant**

Verwendung eines flüssigen oder pastösen leitfähigen Stoffs zur Herstellung einer heizenden Oberflächenbeschichtung

Use of a fluid or pasty conductive material for the realization of a heating surface coating

(84) Etats contractants désignés:
**BE CH DE DK ES GB IT LI LU NL**

(30) Priorité: **03.09.1993 FR 9310757**
**29.04.1994 FR 9405563**

(43) Date de publication de la demande:
**08.03.1995 Bulletin 1995/10**

(73) Titulaire: **LES PEINTURES TECHNIQUES RENAUDIN**
**F-13008 Marseille (FR)**

(72) Inventeurs:
• **Thuny, Gilles**
**F-13001 Marseille (FR)**
• **Sinigaglia, Jean-Claude**
**F-13008 Marseille (FR)**

(74) Mandataire: **Domange, Maxime et al**
**Cabinet Beau de Lomenie,**
**232, avenue du Prado**
**13295 Marseille Cedex 08 (FR)**

(56) Documents cités:
**EP-A- 0 359 569           WO-A-94/00851**

• **DATABASE WPI Section Ch, Derwent Publications Ltd., London, GB; Class A85, AN 90-220718 & JP-A-2 149 424 (OTSUKA) 8 Juin 1990**

Remarques:
Le dossier contient des informations techniques présentées postérieurement au dépôt de la demande et ne figurant pas dans le présent fascicule.

Printed by Jouve, 75001 PARIS (FR)

# EP 0 641 845 B1

**Description**

L'invention concerne l'utilisation d'une matière fluide ou pâteuse électriquement conductrice, pour la réalisation d'un revêtement de surface chauffant (par rayonnement), notamment d'une peinture chauffante.

Le domaine technique de l'invention est celui des compositions de revêtement, par exemple telles que peintures, vernis, vernis-laques, revêtements épais, crépis.

Une application principale de l'invention est l'utilisation d'une substance pour produire des différences de température. De telles substances sont utilisées plus particulièrement pour être appliquées sur des supports, de manière à obtenir des panneaux radiants pour le chauffage par rayonnement, et des systèmes de chauffage électrique en utilisant le chauffage par résistance.

On connaît déjà, par le Certificat d'Auteur bulgare BG 15934, une matière électriquement résistante qui est appliquée sous la forme d'une peinture ou d'une pâte, sur une surface isolante, telle que sur des murs de pièces et/ou locaux à chauffer. Cette matière est utilisée pour le chauffage par rayonnement et comprend :

- du graphite gris ou noir, à raison de 100 parties en poids ;
- une matière de charge neutre, à raison de 0 à 50 parties en poids ;
- un vernis noir à feu, à raison de 75 à 150 parties en poids ;
- et de la corésiline, à raison de 60 à 120 parties en poids.

Cette matière a l'avantage de permettre le chauffage d'un local en basse température, sur de très grandes surfaces d'échange, en consommant moins d'énergie que les systèmes traditionnels, de type chauffage central qui, à partir d'une zone ponctuelle surchauffée, utilisent l'air du local comme véhicule thermique.

Tout en ayant des avantages, cette matière présente l'inconvénient d'utiliser du graphite gris ou noir, et du vernis noir à feu comme liant. Les éléments chauffants faits de graphite gris ou noir et de vernis noir à feu, nécessitent un traitement mécanique en vue d'acquérir les paramètres électriques nécessaires. Le vernis noir à feu présente une résistance mécanique relativement faible, se fendille très vite, et détruit, il devient inutilisable...

On connaît aussi, par la demande de brevet français FR-A-2 593 185 déposée le 30 octobre 1986, une matière électriquement résistante pour le chauffage par rayonnement qui comprend du graphite amorphe, du polyacétate de vinyle, de l'alcool dénaturé, et un agent diluant constitué par de la corésiline.

Tout en ayant l'avantage de présenter une résistance mécanique élevée, cette matière présente aussi des inconvénients. Par exemple, la mesure de la résistance de cette peinture graphitée montre une résistance importante, ce qui ne permet le passage que d'une intensité de courant très faible, pour une tension appliquée aux bornes d'un tel revêtement de l'ordre de 50 volts.

On commercialise, par ailleurs, des peintures renfermant un faible pourcentage en poids (généralement de l'ordre de 3 %) de charges conductrices. L'incorporation, au sein desdites peintures, desdites charges est destinée à améliorer leur application, en les rendant électrostatiques. Lesdites peintures ne sont pas, au vu de la faible teneur de charges qu'elles renferment, électriquement conductrices.

Enfin, il a été décrit dans EP-A-0 359 569 et WO-A-94 00851 (publié le 6.1.1994; c'est à dire un document appartenant à l'état de la technique visé à l'Art. 54(3) CBE) des liants rendus très électriquement conducteurs par incorporation en leur sein de charges conductrices spécifiques. De tels liants chargés sont préconisés pour constituer des revêtements antistatiques ou des peintures applicables aux pistolets électrostatiques.

La présente invention a pour objectif de proposer l'utilisation d'une matière fluide ou pâteuse spécifique aux fins décrites dans les documents BG et FR ci-dessus ; ladite matière ne présentant pas les inconvénients indiqués ci-dessus et permettant de diminuer la résistance électrique du revêtement correspondant, de telle sorte que les tensions à appliquer aux bornes d'un tel revêtement, soient relativement faibles pour l'obtention d'une intensité de courant suffisante.

Conformément à l'invention, ladite matière fluide ou pâteuse utilisée renferme, de façon caractéristique, dans un liant pour revêtement de surface de 20 à 80 % en poids de charges conductrices consistant en un support minéral lamellaire enrobé par une poudre à base d'un oxyde double ou d'un mélange d'oxydes doubles ; le(s)dit(s) oxyde(s) double(s) répondant à la formule :

$$A_x \, B_{1-x} \, O_{\frac{5-x}{2}}$$

dans laquelle

- $0 < x < 1$,
- A est choisi parmi les éléments chimiques du groupe IV A ci-après : Ge, Sn, Pb ;

2

- B est choisi parmi les éléments chimiques du groupe V A ci-après : As, Sb, Bi et
- O représente l'oxygène.

ledit support minéral représentant de 30 à 70 % en poids desdites charges.

On propose donc, selon la présente invention, l'utilisation de la matière fluide ou pâteuse électriquement conductrice définie ci-dessus, pour recouvrir une surface et mettre en oeuvre un chauffage par rayonnement. On décrit principalement l'invention, en référence à un tel chauffage. Toutefois, l'homme du métier concevra aisément à la lecture de la description qui suit, que ladite utilisation peut se décliner dans différents contextes. Ainsi, la matière en question peut notamment être utilisée aux fins ci-après :

- pour la suppression de l'humidité dans un mur,
- pour le caractère insecticide de la présence d'un courant électrique sur une surface,
- pour le maintien en température de certains liquides ou aliments au sein d'un récipient,
- à titre de simple conducteur électrique (par exemple, à la manière d'un fil électrique connecté à une source de lumière).

De façon caractéristique, ladite matière, renferme dans un liant, de 20 à 80 % en poids de charges spécifiques.

Lesdites charges doivent intervenir en une quantité suffisante ($\geq$ 20 %) pour l'obtention du résultat escompté : rendre la matière dans laquelle elles sont dispersées électriquement conductrice. Elles ne doivent pas intervenir en une trop grande quantité ($\leq$ 80 %) car alors ladite matière présentera une viscosité trop élevée et l'on rencontrera des difficultés pour, notamment, son application sur une surface.

Lesdites charges sont des charges minérales conductrices de l'électricité. Elles consistent plus précisément en un support minéral lamellaire enrobé par une poudre à base d'un oxyde double ou d'un mélange d'oxydes doubles répondant à la formule :

$$A_x B_{1-x} O_{\frac{5-x}{2}}$$

dans laquelle A, B, O et x sont tels que définis ci-dessus.

x ne peut valoir 0 car les composés de formule $B_2O_5$ sont trop conducteurs, pas assez résistants et ne libèrent donc pas assez d'énergie par Effet Joule pour être utiles au sens de l'invention. x ne peut pas, non plus, valoir 1 car les composés de formule $AO_2$ ne sont pas électriquement conducteurs.

On rappelle ici que A est choisi parmi les éléments chimiques du groupe IV A de la classification périodique des éléments chimiques (selon Mendeleïev) : Ge, Sn, Pb ; tandis que B est choisi parmi les éléments chimiques du groupe VA de ladite classification périodique : As, Sb, Bi.

Le support minéral lamellaire des charges spécifiques intervenant dans la matière utilisée selon l'invention peut donc être enrobé par une poudre à base d'un des oxydes doubles ci-après :

$$Ge_x AS_{1-x} O_{\frac{5-x}{2}}$$

$$Ge_x Sb_{1-x} O_{\frac{5-x}{2}}$$

$$Ge_x Bi_{1-x} O_{\frac{5-x}{2}}$$

$$Sn_x As_{1-x} O_{\frac{5-x}{2}}$$

$$Sn_x Sb_{1-x} O_{\frac{5-x}{2}}$$

$$Sn_x Bi_{1-x} O_{\frac{5-x}{2}}$$

$$Pb_x As_{1-x} O_{\frac{5-x}{2}}$$

$$Pb_x \, Sb_{1-x} \, O_{\frac{5-x}{2}}$$

$$Pb_x \, Bi_{1-x} \, O_{\frac{5-x}{2}}$$

$$(0 < x < 1)$$

ou à base d'un mélange desdits oxydes doubles.

Avantageusement, dans les formules ci-dessus, on a

$$0{,}15 \leq x \leq 0{,}85,$$

c'est-à-dire que le rapport A/B est avantageusement compris entre 15/85 et 85/15.

Avantageusement, il intervient l'oxyde double ci-après :

$$Sn_x \, Sb_{1-x} \, O_{\frac{5-x}{2}}, \ 0 < x < 1 \text{ avec, de préférence : } 0{,}15 \leq x \leq 0{,}85.$$

Ladite poudre d'enrobage peut éventuellement contenir, outre les oxydes doubles précisés ci-dessus, au moins un oxyde non conducteur, choisi notamment parmi la silice ($SiO_2$) et le dioxyde de titane ($TiO_2$). L'intervention de tels oxydes (seuls ou en mélange) permet, d'une part, d'augmenter la taille des charges conductrices et d'autre part d'abaisser la résistance électrique de la matière fluide les contenant. Elle est bien évidemment limitée en quantité. En fait, les oxydes non conducteurs ne peuvent constituer au maximum que 25 % en poids de l'enrobage.

Les oxydes doubles conducteurs, en mélange ou pas avec au moins un oxyde non conducteur, enrobent un support minéral lamellaire. Un tel support peut notamment consister en des particules de phyllosilicates naturels ou en des particules de matériaux de structure graphitique.

On peut notamment faire intervenir des particules de talc, (de formule $Mg_3 \, Si_4 \, O_{10} \, (OH)_2$), de micas (mica phlogopite de formule $KMg_3 \, Al \, Si_3 \, O_{10} \, (OH)_2$, mica paragonite de formule $Na \, Al_2 \, Si_3 \, Al \, O_{10} \, (OH)_2$, mica muscovite de formule $K \, Al_2 \, Si_3 \, Al \, O_{10} \, (OH)_2$), de pyrophyllite (de formule $Al_2 \, Si_4 \, O_{10} \, (OH)_2$) ou de carbone ou de nitrure de bore (BN).

Selon une variante préférée de l'invention, la matière utilisée renferme des charges conductrices qui consistent en des particules de talc ou de mica enrobées par une poudre à base de l'oxyde double de formule

$$Sn_x \, Sb_{1-x} \, O_{\frac{5-x}{2}},$$

$0 < x < 1$ avec de préférence $0{,}15 \leq x \leq 0{,}85$.

On précisera ici que le coeur minéral desdites charges conductrices représente environ 30 à 70 % en poids.

D'une manière générale, les charges conductrices qui sont renfermées dans la matière fluide ou pâteuse utilisée selon l'invention, sont de dimensions limitées. Il convient notamment que ladite matière soit stable et présente une viscosité compatible avec son utilisation. Ainsi lesdites charges présentent-elles généralement un diamètre inférieur ou égal à 15 $\mu m$.

Pour l'obtention desdites charges, on met en oeuvre des procédés classiques. On peut notamment les préparer :

- par atomisation : une solution des oxydes renfermant les particules de support minéral est injectée dans un courant d'air chaud ; ou
- par cristallisation : une solution des oxydes renfermant les particules de support minéral est refroidie jusqu'à cristallisation ; on broie ensuite les cristaux.

Pour la préparation de la matière fluide ou pâteuse utilisée selon l'invention, on procède par simple incorporation desdites charges dans le liant. En fait, on disperse lesdites charges au sein dudit liant. La dispersion comprend un mélange à faible taux de cisaillement. Il convient en effet de ne pas séparer, au cours dudit mélange, la poudre (l'enrobage) du support des charges conductrices.

Le liant intervenant est un liant classique du type de ceux intervenant dans les peintures, vernis, vernis-laque, revêtements plus épais selon l'art antérieur.

On utilise avantageusement un vernis du type Pliolite® (à base de copolymères styrène-butadiène), vernis filmogène, soluble dans les solvants non aromatiques et à faible odeur. De nombreux autres liants, à base de polymères en phase aqueuse ou dans un solvant, peuvent être utilisés et notamment des acryliques solvants, du caoutchouc chloré ou cyclisé ainsi que tous types d'émulsions vinylique, acrylique, styrène-acrylique. On peut notamment faire intervenir, selon l'invention, les charges conductrices, dans une peinture sans odeur, en phase aqueuse (latex).

Les solvants intervenant dans la composition dudit liant sont classiques (eau, solvants aliphatiques ).

On indiquera par ailleurs que ledit liant peut en outre renfermer des additifs conventionnels tels que notamment des agents anti-sédimentation ou anti-redéposition, des agents épaississants, des agents mouillants... De tels additifs sont familiers à l'homme du métier. Les matières fluides ou pâteuses selon l'invention peuvent ainsi renfermer des additifs commercialisés sous les marques Bentone® et Puff-it®, à titre respectivement d'agents anti-redéposition et épaississant et de la lécithine de soja, à titre d'agent mouillant.

L'utilisation selon l'invention desdites matières fluides ou pâteuses, électriquement conductrices, présentent un certain nombres d'avantages. Ces matières permettent notamment d'obtenir la résistance adéquate pour travailler, sous un faible ampérage, tout en appliquant une tension aux bornes qui peut varier de 12 à 220 V. Elles sont particulièrement intéressantes en ce qu'elles peuvent fonctionner sous de faibles voltages (12 à 24 V).

Elles peuvent être appliquées aussi bien sur des petites que sur des grandes surfaces, et permettre ainsi un chauffage uniforme et agréable de pièces. Elles peuvent être appliquées sur différents supports électriquement neutres (isolants), tels que le béton, les plaques de marbre par simple application au pinceau, au pistolet à peinture, à la brosse plate, à la spatule, ou à l'aide d'une machine d'enduction au même titre qu'une peinture ordinaire.

En outre, il est possible d'obtenir la puissance électrique (la température) souhaitée, en faisant varier la largeur et la longueur de la surface recouverte par la matière en question. Pour maîtriser ladite puissance, on dispose en fait de deux paramètres : la surface recouverte et la tension aux bornes.

Selon son premier objet, l'invention concerne donc l'utilisation pour réaliser un revêtement de surface chauffant de la matière fluide ou pâteuse, électriquement conductrice, décrite ci-dessus. De façon caractéristique, ladite matière renferme les charges conductrices décrites ci-dessus.

Selon son deuxième objet, l'invention concerne un procédé de mise en oeuvre de l'utilisation de la matière fluide ou pâteuse, électriquement conductrice, décrite ci-dessus. Ledit procédé comprend les étapes ci-après :

- mise en place sur un support d'au moins deux moyens de mise sous tension d'une longueur 1 et espacés d'une distance d, lesdits paramètres 1 et d étant choisis en fonction de la puissance escomptée ;
- application d'une couche de ladite matière fluide ou pâteuse entre lesdits moyens de mise sous tension, de telle sorte que ladite couche conduise l'électricité lors de la mise sous tension.

Les moyens de mise sous tension utilisés sont, de façon classique, des éléments conducteurs allongés, tels que des bandes adhésives renfermant du cuivre, de l'argent, de l'aluminium ou des barrettes métalliques (par exemple, des barrettes de cuivre). Lesdits moyens sont, pour la mise sous tension, reliés à une prise de courant par l'intermédiaire d'un transformateur d'isolement. On fait avantageusement intervenir, dans le circuit électrique, entre ledit transformateur et lesdits moyens un thermostat d'ambiance et un disjoncteur différentiel.

La couche électriquement conductrice peut être appliquée selon différentes formes. Elle peut être appliquée selon une forme allongée, par exemple selon une ligne sinueuse ou sous la forme d'un cadre, de manière à reproduire sensiblement un fil conducteur ou de façon uniforme, de manière à couvrir une surface étendue.

En tout état de cause, elle est appliquée, entre lesdits moyens de mise sous tension.

Elle est évidemment appliquée sur un support non conducteur. Il peut donc s'avérer nécessaire de traiter préalablement ledit support pour le rendre isolant.

Il est enfin nullement exclu, selon le procédé de l'invention, de recouvrir la couche de la matière fluide ou pâteuse électriquement conductrice, d'une couche de peinture ou revêtement classique dite couche de finition.

L'invention sera mieux comprise et d'autres caractéristiques et avantages de celle-ci apparaitront à la lecture de la description des procédés d'utilisation donnés ci-après à titre d'exemple.

Il sera fait référence aux dessins annexés, dans lesquels :

la figure 1 est une vue en perspective d'un mode de mise en oeuvre expérimental du procédé de l'invention ;
la figure 2 est une vue en perspective partielle illustrant un premier mode de mise en oeuvre du procédé de l'invention dans une pièce ;
la figure 3 est une vue en élévation partielle illustrant un second mode de mise en oeuvre du procédé sur un panneau.

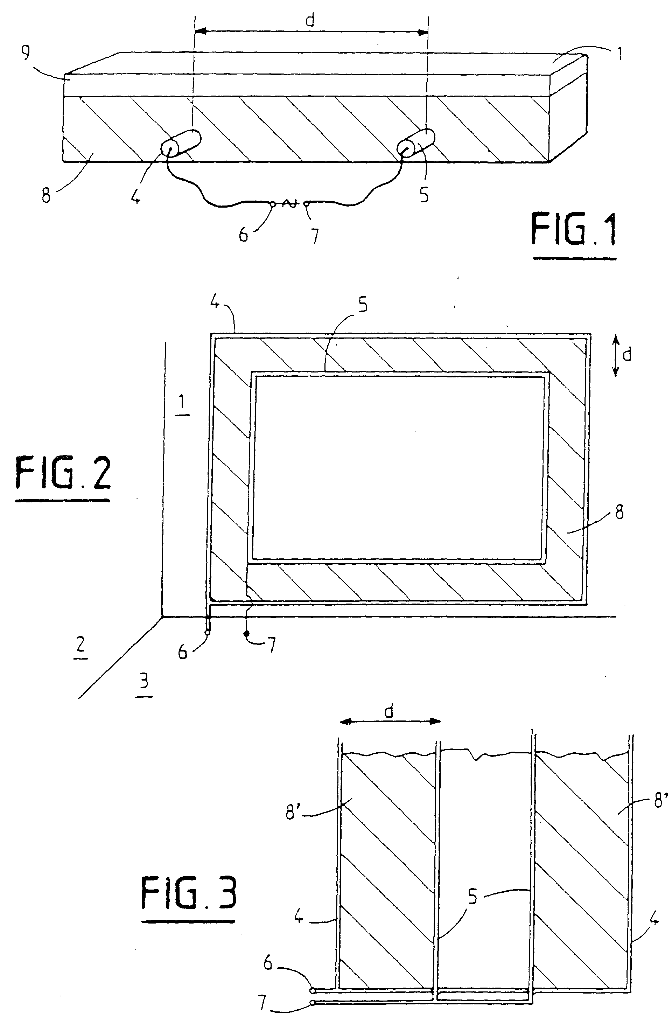

On se réfère d'abord à la figure 1 : le support 1 qui y est représenté, par exemple en bois laminé, est revêtu d'une couche de peinture primaire isolante 9 préalablement appliquée, et contenant des particules radiantes permettant de refléter la chaleur vers l'extérieur (des charges conductrices, au sens de l'invention).

Deux moyens de mise sous tension 4, 5 eux-mêmes reliés à des bornes 6, 7 auxquelles est appliquée une différence de potentiel variable, sont placés sur le support 1, plus précisément sur la couche isolante 9, espacés d'une distance d variable.

Les moyens de mise sous tension 4, 5, sont des barrettes de cuivre disposées transversalement à la couché de matière électriquement conductrice 8.

On se réfère ensuite à la figure 2 : la pièce qui y est représentée comporte deux murs 1, 2 et un sol 3. Par rapport au mode de réalisation de la figure 1, il faut noter que la couche électriquement conductrice 8 est appliquée selon une forme allongée, plus particulièrement en forme de cadre. Les moyens de mise sous tension 4, 5, sont constitués par des barrettes de cuivre, avantageusement des cordons conducteurs, qui encadrent la couche de matière conductrice 8 selon l'invention.

De façon alternative, la couche électriquement conductrice 8 peut être appliqué selon une ligne sinueuse, de manière à reproduire les résistances électriques de type connu, par exemple disposées en zigzag.

Préférentiellement, une couche de finition décorative et contenant des particules radiantes, est appliquée de manière à masquer l'ensemble des éléments conducteurs.

On se réfère enfin à la figure 3 : le panneau qui est représenté présente deux couches électriquement conductrices 8' appliquées de manière uniforme, afin de couvrir deux surfaces étendues entre deux paires de moyens de mise sous tension 4, 5, les moyens de mise sous tension étant alternés et montés en dérivation.

Cette disposition permet d'augmenter la température obtenue dans la pièce.

Les trois modes de réalisation précédemment décrits en référence aux figures annexées permettent de réguler la température obtenue grâce à la présence d'un variateur de tension aux bornes d'une source alternative, par exemple.

On se propose enfin d'illustrer l'invention, selon son premier aspect, par l'exemple ci-après.

Des matières fluides électriquement conductrices ont été préparées avec les ingrédients ci-après.

<u>Liant</u> : un vernis (V) renfermant :

50 parties en poids de Plioway® EC1 (terpolymère vinyl-acrylique thermoplastique)
300 parties en poids de White Spirit (solvant aliphatique renfermant moins de 5 % en poids d'aromatiques).

<u>Charges conductrices</u> (C.C.) : on a utilisé des produits disponibles dans le commerce et plus précisément les particules commercialisées par Merck sous les marques : MINATEC® 30 CM et MINATEC® 31 CM. On indique ci-après les caractéristiques de ces charges.

On peut également utiliser aux fins de l'invention les particules commercialisées par Du Pont de Nemours sous la marque ZELTEC®.

MINATEC® 31 CM : il s'agit de particules de mica enrobées par un oxyde double d'étain et d'antimoine répondant à la formule $Sn_{0,85} Sb_{0,15} O_{2,075}$. Le mica représente environ 59 % en poids desdites particules, l'oxyde double environ 41 % en poids. Lesdites particules sont opaques, d'une résistivité inférieure à 100 $\Omega$ x cm, d'une taille inférieure à 15 $\mu$m. Elles ont une masse volumique d'environ 3,6 g/cm$^3$.

MINATEC® 30 CM : il s'agit de particules de mica enrobées par un mélange de l'oxyde double $Sn_{0,85} Sb_{0,15} O_{2,075}$, de silice ($SiO_2$) et de dioxyde de titane ($TiO_2$). Le mica représente environ 41 % en poids desdites particules, l'oxyde double environ 43 % en poids, la silice environ 4 % en poids et le dioxyde de titane 12 % en poids. Lesdites particules sont transparentes, d'une résistivité inférieure à 150 $\Omega$ x cm, d'une taille inférieure à 15 $\mu$m. Elles ont une masse volumique d'environ 3,6 g/cm$^3$.

<u>Additifs</u> :

agent anti redéposition :     Bentone® SD 1 commercialisé par la Société Industrielle du Titane.

agent épaississant :     Puff®-it commercialisé par Carbonel et Jacquemot.

agent mouillant :     lécithine de soja commercialisé par Lambert Rivière.

On a mélangé lesdits ingrédients pour obtenir une matière fluide électriquement conductrice dont la composition et les caractéristiques sont indiquées ci-après :

|  | % en poids | Extrait sec en poids (g) | Densité | Volume sec (cm$^3$) |
|---|---|---|---|---|
| Vernis (V) | 48,64 | 7,75 | 1,03 | 7,52 |

(suite)

|  | % en poids | Extrait sec en poids (g) | Densité | Volume sec (cm$^3$) |
|---|---|---|---|---|
| Charges conductrices (C.C.) | 49,36 | 47,35 | 3,6 | 13,25 |
| Bentone SD1 | 1 | 0,98 | 1,6 | 0,61 |
| Puff-it | 0,6 | - | - |  |
| Lécithine | 0,4 | - | - |  |

Ladite matière présente donc les caractéristiques techniques ci-après :

| Extrait sec en poids | 56,08 |
|---|---|
| Extrait sec en volume | 26,81 |

Avec un litre de ladite matière, on peut couvrir d'une couche humide de 200 μm d'épaississeur, environ 3 m$^2$.
Les résultats suivants ont été obtenus avec une couche conductrice d'une surface S déposée sur un support en bois mélaminé (voir figure 1). Une différence de potentiel (U) variable a été appliquée aux deux bornes de rubans métalliques adhésifs, écartés d'une distance (d) variable et maintenus au contact de ladite couche conductrice.

| S(cm$^2$) / d (cm) | TE* (°C) | TF** (°C) | I(A) | U(V) | R(Ω) | P(W) | P au m$^2$ (W) |
|---|---|---|---|---|---|---|---|
| 50/10 | 11,7 | > 100 | 0,110 | 206 | 3 100 | 22,6 | 4 532 |
| 75/15 | 11,9 | 60 | 0,110 | 204 | 3 950 | 22,4 | 2 992 |
| 100/20 | 12,3 | 42 | 0,100 | 205 | 4 610 | 20,5 | 2 050 |
| 125/25 | 12,4 | 40 | 0,100 | 204 | 4 700 | 20,4 | 1 632 |

\* TE : température ambiante

\*\* TF : température de la couche

## Revendications

1. Utilisation d'une matière fluide ou pâteuse électriquement conductrice pour la réalisation d'un revêtement de surface chauffant, notamment d'une peinture chauffante, caractérisée en ce que ladite matière renferme, dans un liant pour revêtement de surface, de 20 à 80 % en poids de charges conductrices consistant en un support minéral lamellaire enrobé par une poudre à base d'un oxyde double ou d'un mélange d'oxydes doubles ; le(s)dit(s) oxyde(s) double(s) répondant à la formule :

$$A_x B_{1-x} O_{\frac{5-x}{2}} ;$$

dans laquelle

- $0 < x < 1$,
- A est choisi parmi les éléments chimiques du groupe IV A ci-après : Ge, Sn, Pb ;
- B est choisi parmi les éléments chimiques du groupe V A ci-après : As, Sb, Bi et
- O représente l'oxygène;

ledit support minéral représentant de 30 à 70 % en poids desdites charges.

**2.** Utilisation selon la revendication 1, caractérisée en ce que lesdites charges conductrices sont des particules de dimension inférieure ou égale à 15 μm.

**3.** Utilisation selon l'une des revendications 1 ou 2, caractérisée en ce que ledit support minéral lamellaire consiste en des particules de phyllosilicates naturels ou en des particules de matériaux de structure graphitique.

**4.** Utilisation selon l'une quelconque des revendications 1 à 3, caractérisée en ce que, dans la formule de l'oxyde double ou des oxydes doubles intervenant : $0,15 \leq x < 0,85$.

**5.** Utilisation selon l'une quelconque des revendications 1 à 4, caractérisée en ce que ladite poudre d'enrobage ne contient qu'un (ou un mélange d')oxyde(s) double(s) ou contient en outre au moins un oxyde non conducteur choisi parmi la silice et le dioxyde de titane ; le(s)dit(s) oxyde(s) non conducteur(s) n'intervenant que pour représenter au maximum 25 % en poids de ladite poudre d'enrobage.

**6.** Utilisation selon l'une quelconque des revendications 1 à 5, caractérisée en ce que lesdites charges conductrices consistent en des particules de talc ou mica enrobées d'une poudre à base de l'oxyde double de formule :

$$Sn_x\, Sb_{1-x} O_{\frac{5-x}{2}} \,.$$

**7.** Procédé de mise en oeuvre de l'utilisation selon l'une quelconque des revendications 1 à 6, caractérisé en ce qu'il comprend les étapes ci-après :

- mise en place sur un support (1) d'au moins deux moyens de mise sous tension (4,5) d'une longueur 1 et espacés d'une distance d, lesdits paramètres 1 et d étant choisis en fonction de la puissance escomptée;
- application d'une couche (8,8') de ladite matière fluide ou pâteuse entre lesdits moyens de mise sous tension (4,5) de telle sorte que ladite couche (8,8') dégage de la chaleur en conduisant l'électricité lors de la mise sous tension.

**8.** Procédé selon la revendication 7, caractérisé en ce que ladite couche (8, 8') est appliquée, selon une forme allongée ou sous la forme d'un cadre (8) de manière à reproduire sensiblement un fil conducteur ou de façon uniforme (8') de manière à couvrir une surface étendue, entre lesdits moyens de mise sous tension (4, 5).

**9.** Procédé selon l'une des revendications 7 ou 8, caractérisé en ce qu'il comprend en outre une étape préalable d'application sur ledit support (1) d'une couche isolante.

**10.** Procédé selon l'une quelconque des revendications 7 à 9, caractérisé en ce que lesdits moyens de mise sous tension (4, 5) consistent en des éléments conducteurs allongés ou des barrettes métalliques.

**Patentansprüche**

**1.** Verwendung eines dünnflüssigen oder pastösen elektrisch leitfähigen Materials für die Herstellung einer heizenden Oberflächenbeschichtung, insbesondere eines heizenden Anstrichs, dadurch gekennzeichnet, dass das Material in einem Bindemittel für eine Oberflächenbeschichtung 20 bis 80 Gew.-% leitfähige Füllstoffe, bestehend aus einem lamellaren mineralischen Träger, umhüllt von einem Pulver auf Basis eines Doppeloxids oder einer Mischung von Doppeloxiden, umfasst, wobei das oder die Doppeloxid(e) der Formel:

$$A_x\, B_{1-x}\, O_{(5-x)/2} \,,$$

in der:

- $0 < x < 1$;
- A unter den nachfolgenden chemischen Elementen der Gruppe IV A: Ge, Sn, Pb, ausgewählt ist;
- B unter den nachfolgenden chemischen Elementen der Gruppe V A: As, Sb, Bi, ausgewählt ist und
- O für Sauerstoff steht,

entspricht bzw. entsprechen, wobei der mineralische Träger 30 bis 70 Gew.-% der Füllstoffe ausmacht.

2. Verwendung nach Anspruch 1, dadurch gekennzeichnet, dass die leitfähigen Füllstoffe Teilchen mit einer Abmessung von weniger als oder gleich 15 μm sind.

3. Verwendung nach einem der Ansprüche 1 oder 2, dadurch gekennzeichnet, dass der lamellare mineralische Träger aus Teilchen von natürlichen Phyllosilicaten oder aus Teilchen von Materialien mit Graphitstruktur besteht.

4. Verwendung nach einem der Ansprüche 1 bis 3, dadurch gekennzeichnet, dass in der Formel des vorkommenden Doppeloxids oder der vorkommenden Doppeloxide: $0,15 \leq x \leq 0,85$.

5. Verwendung nach einem der Ansprüche 1 bis 4, dadurch gekennzeichnet, dass das Umhüllungspulver lediglich ein (oder eine Mischung von) Doppeloxid(en) enthält oder ausserdem mindestens ein nicht-leitfähiges Oxid, ausgewählt unter Siliciumdioxid und Titandioxid, enthält; wobei das oder die nicht-leitfähige(n) Oxid(e) lediglich in dem Maße vorkommt bzw. vorkommen, dass es bzw. sie maximal 25 Gew.-% des Umhüllungspulvers ausmacht bzw. ausmachen.

6. Verwendung nach einem der Ansprüche 1 bis 5, dadurch gekennzeichnet, dass die leitfähigen Füllstoffe aus Talk- oder Glimmerteilchen, umhüllt von einem Pulver auf Basis des Doppeloxids der Formel:

$$Sn_x \, Sb_{1-x} \, O_{(5-x)/2},$$

bestehen.

7. Verfahren zur Ausführung der Verwendung nach einem der Ansprüche 1 bis 6, dadurch gekennzeichnet, dass es die nachfolgenden Schritte umfasst:

- Anordnen von mindestens zwei unter Spannung zu setzenden Mitteln (4,5) mit einer Länge 1 und beabstandet um einen Abstand d auf oder über einem Träger (1), wobei die Parameter 1 und d abhängig von der erwarteten Leistung gewählt werden, und
- Auftragen einer Schicht (8,8') des dünnflüssigen oder pastösen Materials zwischen die unter Spannung zu setzenden Mittel (4,5) dergestalt, dass die Schicht (8,8') Wärme freisetzt, indem sie Elektrizität während des UnterSpannung-Setzens leitet.

8. Verfahren nach Anspruch 7, dadurch gekennzeichnet, dass die Schicht (8,8') zwischen die unter Spannung zu setzenden Mittel (4,5) gemäß einer langgestreckten Form oder in Form eines Rahmens (8) dergestalt, dass im wesentlichen ein Leitungsdraht reproduziert wird, oder auf gleichförmige Weise (8') dergestalt, dass eine ausgedehnte Oberfläche bedeckt wird, aufgetragen wird.

9. Verfahren nach einem der Ansprüche 7 oder 8, dadurch gekennzeichnet, dass es darüber hinaus einen vorab erfolgenden Schritt eines Auftragens einer isolierenden Schicht auf den Träger (1) umfasst.

10. Verfahren nach einem der Ansprüche 7 bis 9, dadurch gekennzeichnet, dass die unter Spannung zu setzenden Mittel (4,5) aus langgestreckten leitfähigen Elementen oder metallischen Stegen bestehen.

**Claims**

1. Use of an electrically conductive fluid or semifluid material for making a heating surface covering, in particular of a heating paint, characterized in that said material contains, in a surface-covering binder, 20% to 80% by weight of conductive filler constituted by a flaky inorganic medium coated in a powder based on a double oxide or on a mixture of double oxides, said double oxide(s) satisfying the following formula:

$$A_x B_{1-x} O_{\frac{5-x}{2}}$$

in which:

- 0 < x < 1;
- A is selected from the following chemical elements in group IV A: Ge, Sn, Pb;
- B is selected from the following chemical elements in group V A: As, Sb, Bi; and
- O represents oxygen.

2. Use according to claim 1, characterized in that said conductive fillers are particles of size less than or equal to 15 μm.

3. Use according to claim 1 or 2, characterized in that said flaky inorganic medium consists in natural phyllosilicate particles or in particles of materials of graphite structure.

4. Use according to any one of claims 1 to 3, characterized in that in the formula for the double oxide(s) involved: $0.15 \leq x \leq 0.85$.

5. Use according to any one of claims 1 to 4, characterized in that said coating powder contains only one double oxide, or a mixture of double oxides, or further contains at least one non-conductive oxide selected from silica and titanium dioxide; said non-conductive oxide(s) being involved only to represent at the most 25% by weight of said coating powder.

6. Use according to any one of claims 1 to 5, characterized in that said conductive fillers comprise particles of talc or mica coated in a powder based on the double oxide having the formula:

$$Sn_xSb_{1-x}O_{\frac{5-x}{2}}$$

7. A method for implementing the use according to any one of claims 1 to 6, characterized in that it comprises the following steps:

- placing at least two voltage-applying means (4, 5) on a substrate (1), the voltage-applying means being of length $l$ and spaced apart by a distance $d$, said parameters $l$ and $d$ being selected as a function of the intended power; and
- applying a layer (8, 8') of said fluid or semifluid material between said voltage-applying means (4, 5) in such a manner that said layer (8, 8') gives off heat by conducting electricity when voltage is applied thereto.

8. A method according to claim 7, characterized in that said layer (8, 8') is applied in an elongate shape or in the form of a frame (8) so as substantially to reproduce a conductive wire, or in uniform manner (8') so as to cover an extended area between said voltage-applying means (4, 5).

9. A method according to claim 7 or 8, characterized in that it further comprises a prior step of applying an insulating layer on said substrate (1).

10. A method according to any one of claims 7 to 9, characterized in that said voltage-applying means (4, 5) are constituted by elongate conductive elements or metal bars.

d

9                                                                    1

8

4                              5

6      7

## FIG.1

4           5

d

1

## FIG.2

8

2

6      7

3

d

## FIG.3

8'                              8'

5

4           4

6

7